(19) **Europäisches Patentamt / European Patent Office / Office européen des brevets**

(11) **EP 1 245 951 B1**

(12) **EUROPEAN PATENT SPECIFICATION**

(45) Date of publication and mention
of the grant of the patent:
**18.01.2012   Bulletin 2012/03**

(51) Int Cl.:
*G01N 25/04* (2006.01)    *B01D 9/00* (2006.01)

(21) Application number: **02076191.2**

(22) Date of filing: **27.03.2002**

(54) **Method and measuring system for determining the crystal fraction in a crystal suspension mixture**

Verfahren und Messsystem zur Bestimmung des Kristallanteils einer Kristallsuspension

Procédé et système de mesure servant à déterminer la fraction cristalline d'une suspension de cristaux

(84) Designated Contracting States:
**AT BE CH CY DE DK ES FI FR GB GR IE IT LI LU MC NL PT SE TR**

(30) Priority: **30.03.2001  NL 1017751**

(43) Date of publication of application:
**02.10.2002   Bulletin 2002/40**

(73) Proprietor: **Sulzer Chemtech AG**
**8401 Winterthur (CH)**

(72) Inventor: **Jansen, Johannes Josephus Andreas Gerardus**
**5571 NL Bergeijk (NL)**

(74) Representative: **Kluthe, Stefan et al**
**Sulzer Management AG**
**Patentabteilung / 0067**
**Zürcherstrasse 14**
**8401 Winterthur (CH)**

(56) References cited:
DE-A- 2 615 340    DE-A- 4 209 073
GB-A- 1 352 567    US-A- 5 709 470

**Description**

The invention relates to a method and measuring system for determining the crystal fraction in a crystal suspension mixture in a crystal-growing vessel being part of a crystallization apparatus for concentrating a mixture by means of crystallization for the purpose of obtaining a concentrated product.

An apparatus for concentrating a liquid mixture for the purpose of obtaining a concentrated product, which is also referred to by the generic term suspension crystallization apparatus, is used in the foodstuffs industry as well as in the chemical/petrochemical processing industry.

In the foodstuffs industry, suspension crystallization, also called freeze concentration, is used for thickening an aqueous solution. Thickening enables a significant reduction of the costs of transport and storage. The quality of the final concentrated food product is not affected by freeze concentration, unlike thickening processes, which are based on the evaporation of water by means of heat, in which processes the loss and/or oxidation of components such as aromas and flavourings is inevitable.

Another application of the process of suspension crystallization is the concentration of aqueous waste flows in the chemical/petrochemical processing industry. Said waste flows are incinerated after being thickened. The economic importance of extracting as much as possible water from the waste flow before the thickened waste flow is supplied to the incineration plant is great, therefore.

In the first place, the amount of water to be heated to the high combustion temperature is reduced, and in the second place the combustion value of the waste flow increases in proportion as less water is present. Consequently, the use of the thickening process leads to a major reduction of the auxiliary fuel to be supplied to the incineration plant. Ideally, the amount of auxiliary fuel to be supplied amounts to zero, because the combustion value of the thickened waste flow is sufficient for reaching the desired combustion temperature and thus effect a complete decomposition of the harmful waste components.

An important parameter in industrial cold suspension crystallization apparatuses is the crystal or ice fraction in the crystal suspension mixture that is present in large, agitated crystal-growing vessels. The ice crystals must be present in said agitated crystal-growing vessels for a sufficiently long period of time in order to obtain a crystal size such that the crystals can be separated from the liquid as economically as possible by means of a separating device.

By maximising the residence time and thus the growth of ice crystals and, as a result, the crystal yield, a crystal suspension mixture containing the highest possible crystal fraction is maintained in the crystal-growing vessel. Said maximum crystal fraction is limited, however, because the viscosity of the crystal suspension mixture increases along with the increase of the crystal fraction. As a result, agitation of the mixture is no longer possible, and the mixture can no longer be pumped through the apparatus. When the crystal fraction is too high, this will inevitably lead to "foundering" of the apparatus.

In such cases the "frozen" crystal-growing vessel must be cleared of ice by supplying heat. Owing to the relatively large dimensions of a crystal-growing vessel, and also to the slow growing rate of the crystals, said "foundering" leads to a substantial production standstill and considerable production losses.

In order to prevent the crystal fraction in the crystal-growing vessel becoming too high and prevent "foundering" or "freezing" of the apparatus, but also in order to obtain an optimum residence time, it is highly desirable to have an understanding of the crystal fraction in the suspension mixture in the crystal-growing vessel during operation.

Document DE 4209073 discloses a device for determining the crystal contents of a fat (cacao butter) containing substance. A sample of the fat containing substance is extracted from a conduit and taken into a measuring chamber, whereby the sample is cooled while the temperature of the sample is registered in relation to time. The amount of crystals is defined by calculating the enthalpy of fusion based on the cooling curve.

The calculation technique is not clearly described.

To this end, the method for determining the crystal fraction is according to the invention is described in claim 1.

In this manner, a sufficiently accurate and reliable understanding of the crystal fraction in the crystal-growing vessel is obtained, so that the determined value can be used for the capacity regulation of the apparatus. Furthermore it is possible in this manner to prevent the apparatus from "foundering".

In accordance with the invention, the method is furthermore characterized in that mixing of the crystal suspension mixture takes place in step B.

In a more specific embodiment of the method, a correction may be made for the possible external supply of heat and/or for the possible supply of heat resulting from the mixing process, so as to obtain a more accurate determination of the crystal fraction.

In order to prevent the loss of product, the amount of crystal suspension mixture drawn from the crystal-growing vessel can be returned thereto after the determination of the crystal fraction.

The measuring system is according to the invention described in claim 5.

The measuring system functions fully automatically and autonomously and can be used while the apparatus is being operated. Consequently, there is no question of any standstill at all.

In specific embodiments of the measuring system according to the invention, the space is a vessel or a bypassed conduit. More in particular, the space is connected to the crystal-growing vessel by means of at least one intermediate conduit.

According to the invention, mixing means may be present in the space so as to obtain a more accurate and quicker measurement. The mixing means may be in the form of a pump for circulating the amount of crystal suspension mixture drawn from the crystal-growing vessel.

In one embodiment of the measuring system according to the invention, the system comprises means which compensate for the expansion of the crystal suspension mixture in the space that occurs during operation. The compensation means may be in the form of a flexible wall portion of the space, for example a membrane. An amount of gas may be present on the side of the flexible wall portion remote from the crystal suspension mixture. In another embodiment, said compensation means may be in the form of an overflow valve.

In addition to that, the measuring system may furthermore comprises display means for displaying the measuring data registered during the measurement and the obtained results.

The invention will now be explained in more detail with reference to the drawing, in which:

Figure 1 schematically shows an apparatus for concentrating a suspension mixture by cold crystallization so as to obtain a concentrated product;
Figures 2A-2C show embodiments of a measuring system according to the invention;
Figure 3 shows a temperature profile obtained by using a measuring system according to the invention.

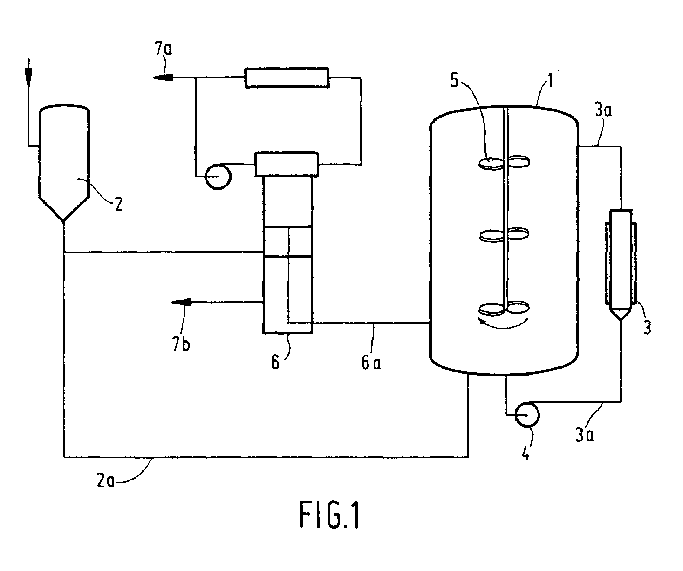

In Figure 1, an apparatus for concentrating a crystal suspension mixture by means of cold crystallization so as to obtain a concentrated product is described.

The core of the apparatus is formed by a crystal-growing vessel 1, which vessel can be filled with a mixture, for example an aqueous solution, via a supply conduit 2a and a supply vessel 2. The crystal-growing vessel is provided with a circular cold crystallization conduit 3a, in which a heat exchanger of the scraped surface type is incorporated. Suspension mixture is drawn from the crystal-growing vessel 1 by means of a pump 4 and carried to the heat exchanger 3 via the conduit 3a. The ice crystals formed at the heat exchanger are subsequently scraped off and introduced into the crystal-growing vessel 1 again via the conduit 3a.

The vessel 1 is furthermore provided with mixing means 5 for mixing the crystal suspension mixture. During operation, a decrease of the process temperature occurs after some time, so that further growth of the ice crystals formed at the heat exchanger 3 can take place inside the crystal-growing vessel 1.

During operation, a particular amount of crystal suspension mixture is drawn from the crystal-growing vessel 1 via the discharge conduit 6a and introduced into a separating device 6. This separating device may be a washing column, for example, as described in European patent publication no. 0 051 340. The separating device separates the ice crystals that have formed from the suspension mixture, so that two waste flows are obtained, reference numeral 7a indicating the discharge of water/crystals and reference numeral 7b indicating the discharge flow of concentrated food product or waste product.

As already described above, it is desirable to maximise the crystal fraction in the crystal-growing vessel in order to achieve an optimum operation of the apparatus. A crystal fraction which is too high, however, will cause an increase of the viscosity of the crystal suspension mixture to be circulated, with the attendant risk of the pump 4, the cold crystallization conduit 3a and the mixing means 5 of foundering or freezing.

The defrosting of the crystal-growing vessel 1, once it has been frozen, by supplying heat thereto takes up a great deal of time and leads to a prolonged production standstill and production losses.

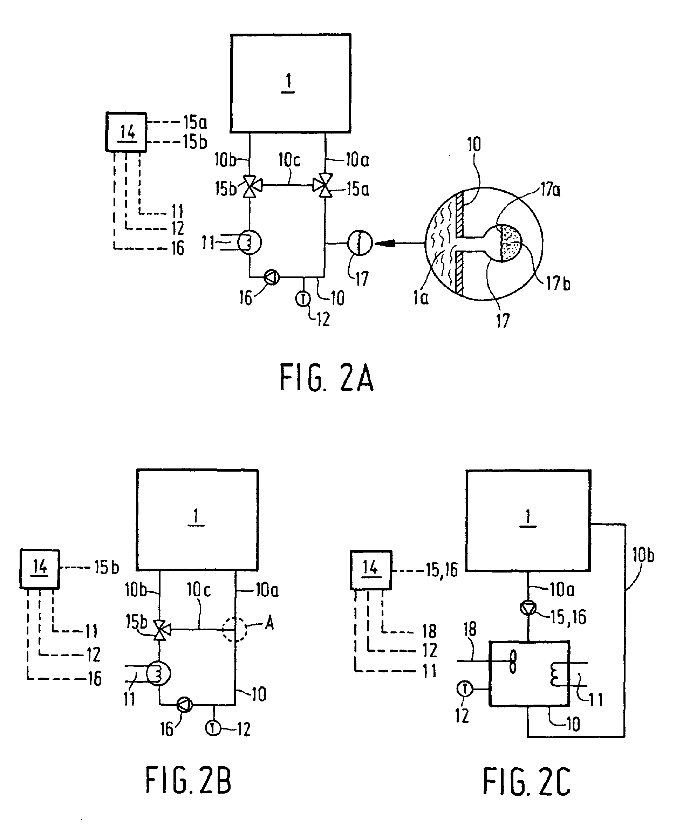

In Figures 2A, 2B and 2C, the embodiments of a measuring system are shown by means of which the crystal fraction of the crystal suspension mixture present in the crystal-growing vessel 1 can be determined in a very quick and effective manner. Like parts are indicated by the same reference numerals.

The embodiment that is shown in Figure 2A comprises a closed space 10 in the form of a bypassed conduit 10-10c. The bypassed conduit is connected to the crystal-growing vessel 1 by means of a supply conduit 10a and a discharge conduit 10b. Furthermore, two three-way valves 15a and 15b, respectively, are incorporated in the conduit 10. In addition to that, a heating element 11 is incorporated in the conduit 10, whilst the measuring system furthermore comprises a temperature sensor 12 and a pump 16.

The operation of the measuring system is as follows. The three-way valve 15b is connected in such a manner that the discharge conduit 10b of the conduit 10 is closed. The three-way valve 15a is opened, so that a certain amount of crystal suspension mixture 1a is drawn from the crystal-growing vessel 1 by means of the continuously operating pump 16, which amount 1a accumulates in the conduits 10 and 10c. A fully closed conduit portion formed by the conduits 10 and the conduit portion 10c between the two three-way valves 15a and 15b is obtained by closing the supply conduit 10a of the circular conduit 10-10c by means of the valve 15a.

The crystal suspension mixture which is trapped in the closed conduit 10-10c contains a particular crystal fraction and forms a representative sample of the suspension mixture that is present in the crystal-growing vessel 1.

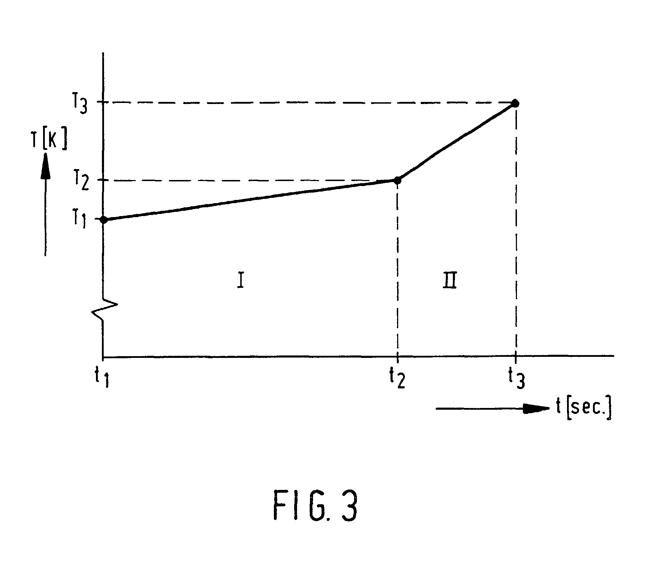

Said trapped amount of crystal suspension mixture is circulated by means of the continuously operating pump 16, whilst in addition heat is added to the crystal suspension mixture by means of the heating element 11 that is incorporated in the conduit 10. Since the specifications of the heating element 11 are known, the amount of heat delivered to the crystal suspension mixture during the measurement can readily be derived. The ice crystals that are present in the crystal suspension mixture will melt during the circulation of the slowly heated crystal suspension mixture. A temperature curve as shown in Figure 3 (to be explained hereinafter) is obtained by measuring the temperature in the crystal suspension mixture to be heated by means of the temperature sensor 12 simultaneously therewith.

The measuring system furthermore includes data processing means 14 which control not only the three-way valves 15a and 15b but also the heating element 11 and the pump 16. Furthermore, the data processing means 14 register the temperature in relation to time by means of the temperature sensor 12, which results in a temperature profile as shown in Figure 3.

In order to compensate for expansion caused by the melting of ice crystals in the crystal suspension mixture in the conduit 10-10c, means that compensate said expansion may be present, as is shown in Figure 2A. in this embodiment, the compensation means consist of a flexible wall portion in the conduit 10-10c or, as the enlarged view shows, as an expansion space 17 which is separated by a flexible membrane 17a. The space 17b may be filled with a gas in that case.

After completion of a measurement, the valve 15b is opened, so that the crystal suspension mixture, which is melted by now, is introduced into the crystal-growing vessel 1 again by means of the pump 16.

The measuring system is now ready for a new measurement: by opening the valve 15a while the valve 15b is in its open position, the continuously operating pump 16 can flush the conduits system 10-10c with the crystal suspension mixture drawn from the crystal-growing vessel 1. Thus, the conduits system 10-10c is cooled down to the operating temperature of the crystal-growing vessel again, so that the next temperature measurement will not be disturbed in an adverse manner. Said flushing also prevents (food) product remaining behind in conduit portion 10c from being heated too much, causing it to go bad and eventually contaminating the crystal suspension mixture present in the crystal-growing vessel.

The embodiment that is shown in Figure 2B is a simpler and cheaper version derived from the measuring system of Figure 2A. In this embodiment, the measuring system only includes one three-way valve 15b, and furthermore also the compensation means 17 for possible expansion have been left out. In practice it has after all become apparent that the physical separation between the crystal suspension mixture in the crystal-growing vessel 1 and in the system of conduits 10-10c is not really necessary. Although the crystal suspension mixture is in contact with the crystal suspension mixture from the crystal-growing vessel at the location of the junction A between the conduit portions 10-10c-10a, the extent to which mixing takes place is so small that said mixing does not have a negative effect on the measurement. In addition, the measurement can be corrected for said mixing. Furthermore, expansion in the direction of the crystal-growing vessel 1 takes place now.

Figure 2C shows another embodiment of a measuring system according to the invention. In this embodiment, the closed space 10 is in the form of a vessel which is connected to the crystal-growing vessel 1 by means of a conduit 10a. Furthermore, a valve 15 with a pump 16 is incorporated in the conduit 10a. Analogously to the systems as described above, a certain amount of crystal suspension mixture can be siphoned over from the crystal-growing vessel 1 to the vessel 10. A heating element 11 and possibly mixing means 18 are provided in the vessel 10. The heat delivery specifications of the heating element 11 are exactly known. Furthermore, a temperature sensor 12 is arranged in the vessel 10. Analogously to what is shown in Figures 2A and 2B, data processing means 14 are present in this embodiment, which data processing means control the valve 15 (pump 16), the heating element 11 and possibly the mixing means 18 in a similar manner and register the temperature by means of the sensor 12 during operation, thus determining a temperature profile corresponding to Figure 3.

After the measurement, the amount of suspension mixture present in the space 10 is pumped back to the crystal-growing vessel 1 via the conduit 10b.

The determination of the crystal fraction of the suspension mixture present in the space 10 (the conduit 10-10c of Figures 2A and 2B or the vessel 10 of Figure 2C) takes place as follows.

While the amount of crystal suspension mixture is being heated, a temperature profile as shown in Figure 3 is obtained by means of the temperature sensor 12. Said temperature profile shows that the temperature of the crystal suspension mixture slightly increases from $T_1$ to $T_2$ during the time interval $t_1$ - $t_2$. During the said time interval $t_1$ - $t_2$, all the heat supplied by the heating element 11 is utilised for melting the ice crystals that are present. The so-called transition point, at which all the ice crystals are melted and the mixture present in the conduit 10 is entirely liquid, is reached at a point in time $t_2$ at a temperature $T_2$.

Then the entirely melted suspension mixture is further heated by the heating element 11 until the suspension mixture has reached a temperature $T_3$ at point in time $t_3$. In order to prevent damage to or loss of quality of the suspension mixture, which is usually a food product, $T_3$ only has a value just above the melting temperature $T_2$.

The data processing means are arranged for deriving the temperature $T_2$ associated with the transition point $t_2$ as well as the starting temperature $T_1$ and the end temperature $T_3$ at points in time $t_1$ and $t_3$. Subsequently, the data processing means 14 derive the specific heat $c_{susp}$ of the entirely melted suspension mixture on the basis of the measuring data $(t_2, T_2)$ and $(t_3, T_3)$ associated with the interval II, in accordance with the formula:

$$W_{t3-t2} \cdot (t_3-t_2) = m_{susp} \cdot c_{susp} \cdot (T_3-T_2) + k_2 \qquad [1]$$

wherein:

$c_{susp}$ = the specific heat coefficient of the suspension mixture [J/kg.K];
$m_{susp}$ = the amount of entirely melted crystal suspension mixture [kg];
$W_{t3-t2}$ = the heat supplied by the heating element 11 during interval II [J/sec] ;
$k_2$ = the compensation factor for the heat supplied by the pump 16 or the mixing means during interval II [J].

Since the amount $m_{susp}$ as well as the value $W_{t3-t2}$ and the value $k_2$ are known or can be derived from the specifications, it is possible to determine the specific heat $c_{susp}$ of the entirely melted crystal suspension mixture, which value is used in formula 2

$$W_{t2-t1} \cdot (t_2-t_1) = m_{ice} \cdot c_{ice} + m_{susp} \cdot c_{susp} \cdot (T_2-T_1) + k_1 \qquad [2]$$

for determining the value $m_{ice} \cdot c_{ice}$, wherein:

$c_{ice}$ = the melting heat coefficient of the ice crystals [J/kg];
$m_{ice}$ = the amount of ice crystals [kg];
$W_{t2-t1}$ = the heat supplied by heating element 11 during interval I [J/sec];
$k_1$ = the compensation factor for the heat supplied by the pump 16 of the mixing means 18 during interval I [J].

In this case, too, the values $W_{t2-t1}$ and $k_1$ are exactly known or can be derived from the specifications, and a reliable value of the crystal fraction in this suspension mixture can be obtained on the basis of the value $m_{ice}.c_{ice}$, wherein $c_{ice}$ is a known physical quantity ($= 3.34 \times 10^5$ J/kg).

The measuring system which is used in this manner enables a fully automatic, reliable and sufficiently accurate determination of the crystal fraction in the crystal suspension mixture that is present in the crystal-growing vessel 1, thus enabling an improved control of the efficiency and the capacity of the apparatus on the basis of the determined value. Since the measuring system only heats the crystal suspension mixture in the conduit 10 to a temperature $T_3$ just above the melting point of the ice crystals, damage to the product caused by heat is prevented. Especially in the foodstuffs industry this is a very desirable feature.

The compensation factors $k_1$ and $k_2$ compensate the measurement for heat supplied to the crystal suspension mixture that has been supplied to the space 10 by the pump 16 (Figures 2A and 2B) or the mixing means 16 (Figure 2C).

Furthermore, complete thermal insulation of the space 10-10c is desirable, since the loss of heat to the surrounding environment or external heat radiation can disturb the measurement or render it inaccurate.

The measuring system according to the invention can be used additionally while the apparatus is being operated, so that adjustments of the apparatus can be effected immediately on the basis of the obtained measuring results. It is possible, therefore, to operate the apparatus permanently at the highest possible crystal fraction, so that the highest possible capacity is obtained. Overloading of the apparatus with the attendant risk of "foundering" or "freezing" of the crystal-growing vessel 1 can thus be avoided.

In addition to that, the measuring system according to the invention is suitable for being used with all kinds of suspension mixtures, because it is not sensitive to undissolved particles, gas bubbles and contamination.

Although the measuring system has been described in connection with the determination of the ice crystal fraction in aqueous solutions for use in suspension crystallization in the foodstuffs industry or the concentration of aqueous waste flows, the measuring system can also be used for determining the crystal fraction when using suspension crystallization for the purpose of obtaining organic materials.

**Claims**

1. A method for determining the crystal fraction in a crystal suspension mixture in a crystal-growing vessel being part of a crystallization apparatus for concentrating a mixture by means of crystallization for the purpose of obtaining a concentrated product, **characterized by** the steps of

> A) drawing a particular amount of crystal suspension mixture from the crystal-growing vessel;
> B) supplying heat to said mixture in relation to time and simultaneously registering the temperature in the mixture;
> C) deriving from the registered temperature profile a first temperature interval from a starting point T1 to a temperature transition point T2 during a time interval from time t1 to time t2, when all the heat supplied is utilised for melting the ice crystals that are present and a second temperature interval from said temperature transition point T2 to an end temperature point T3 at points in time t2 and t3;
> D) deriving the specific heat of the suspension mixture on the basis of the amount of supplied heat and the temperature changes during the second interval;
> E) deriving the melting heat of the crystal suspension mixture on the basis of the amount of supplied heat, the temperature changes during the first interval and the specific heat derived in step D;
> F) determining the crystal fraction on the basis of the melting heat derived in step E and the amount of crystal suspension mixture drawn from the crystal-growing vessel.

2. A method according to claim 1, **characterized in that** mixing of the crystal suspension mixture takes place in step B.

3. A method according to claim 1 or 2, **characterized in that** a correction is made for the possible external supply of heat and/or for the possible supply of heat resulting from the mixing process.

4. A method according to any one or more of the preceding claims, **characterized in that** the amount of crystal suspension mixture drawn from the crystal-growing vessel is returned thereto after step F.

5. A measuring system for determining the crystal fraction in a crystal suspension mixture in a crystal-growing vessel being part of a crystallization apparatus for concentrating a mixture by means of crystallization for the purpose of obtaining a concentrated product,
comprising
a closable space for receiving a particular amount of the crystal suspension mixture during operation;
at least one temperature sensor for measuring the temperature of the crystal suspension mixture; <u>**characterized by**</u> heating means for supplying heat to said particular amount of the crystal suspension mixture;
and
data processing means arranged for the time-related registration of the amount of supplied heat to said particular amount of the crystal suspension mixture as well as the temperature changes in said particular amount of the crystal suspension mixture during said specific time interval, in which
said data processing means are furthermore arranged
for determining the crystal fraction in said particular amount of the crystal suspension mixture, based on the steps of the method according to claim 1.

6. A measuring system according to claim 5, **characterized in that** said space is in the form of a vessel.

7. A measuring system according to claim 5, **characterized in that** said space is in the form of a bypassed conduit.

8. A measuring system according to any one or more of the preceding claims 5 - 7, **characterized in that** the space is connected to the crystal-growing vessel by means of at least one intermediate conduit.

9. A measuring system according to any one or more of the preceding claims 5 - 8, **characterized in that** mixing means are present in said space.

10. A measuring system according to claim 9, **characterized in that** said mixing means are in the form of a pump for circulating the amount of crystal suspension mixture drawn from the crystal-growing vessel.

11. A measuring system according to any one or more of the preceding claims 5 - 8, **characterized in that** the system comprises means which compensate for the expansion of the crystal suspension mixture in the space that occurs during operation.

**12.** A measuring system according to claim 11, **characterized in that** compensation means are in the form of a flexible wall portion of the space, for example a membrane.

**13.** A measuring system according to claim 12, **characterized in that** an amount of gas is present on the side of the flexible wall portion remote from the crystal suspension mixture.

**14.** A measuring system according to claim 12, **characterized in that** said compensation means are in the form of an overflow valve.

**15.** A measuring system according to any one or more of the preceding claims 5 - 14, **characterized in that** the system furthermore comprises display means for displaying the measuring data registered during the measurement and the obtained results.

**Patentansprüche**

**1.** Verfahren zur Bestimmung einer Kristallfraktion in einer Kristallsuspensionsmischung in einem Kristallwachstumsbehälter, welcher Teil einer Kristallisationsvorrichtung zum Aufkonzentrieren einer Mischung mittels Kristallisation zum Erhalt eines aufkonzentrierten Produktes ist, **gekennzeichnet durch** die Schritte

A) Abziehen einer speziellen Menge an Kristallsuspensionsmischung vom Kristallwachstumsbehälter;
B) Zufuhr von Wärme zu der Mischung in Abhängigkeit von der Zeit und gleichzeitig Erfassen der Temperatur in der Mischung,
C) Ableiten eines ersten Temperaturintervalls vom erfassten Temperaturprofil von einem Startpunkt $T_1$ zu einem Temperaturübergangspunkt $T_2$ während eines Zeitintervalls von der Zeit $t_1$ bis zur Zeit $t_2$, sodass die gesamte zugeführte Wärme zum Schmelzen aller vorhandenen Eiskristalle verwendet wird und eines zweiten Temperaturintervalls, vom Temperaturübergangspunkt $T_2$ zu einem Endtemperaturpunkt $T_3$ zu den Zeitpunkten $t_2$ und $t_3$,
D) Ableiten der spezifischen Wärme der Suspensionsmischung auf der Basis der zugeführten Wärme und der Temperaturänderungen während des zweiten Intervalls,
E) Ableiten der Schmelzwärme der Kristallsuspensionsmischung auf der Basis der zugeführten Wärmemenge, der Temperaturänderungen während des ersten Intervalls und der spezifischen Wärme, welche in Schritt D abgeleitet worden ist,
F) Bestimmen der Kristallfraktion auf der Grundlage der Schmelzwärme, welche aus Schritt E abgeleitet worden ist und der Kristallsuspensionsmischungsmenge, welche vom Kristallwachstumsbehälter abgezogen worden ist.

**2.** Verfahren nach Anspruch 1, **dadurch gekennzeichnet, dass** die Mischung der Kristallsuspensionsmischung im Schritt B erfolgt.

**3.** Verfahren nach Anspruch 1 oder 2, **dadurch gekennzeichnet, dass** eine Korrektur für die mögliche externe Wärmezufuhr und/oder die mögliche Wärmezufuhr durch den Mischprozess vorgenommen wird.

**4.** Verfahren nach einem oder mehreren der vorhergehenden Ansprüche, **dadurch gekennzeichnet, dass** die Menge an Kristallsuspensionsmischung, welche vom Kristallwachstumsbehälter abgezogen wird, im Anschluss an Schritt F dorthin zurückgeführt wird.

**5.** Ein Messsystem zur Bestimmung der Kristallfraktion in einer Kristallsuspensionsmischung in einem Kristallsuspensionsbehälter, der Teil einer Kristallisationsvorrichtung ist um eine Mischung mittel Kristallisation aufzukonzentrieren, um ein aufkonzentriertes Produkt zu erhalten, Ableiten eines ersten Temperaturintervalls vom registrierten Temperaturprofil von einem Startpunkt $T_1$ zu einem Temperaturübergangspunkt $T_2$ während eines Zeitintervalls von der Zeit $t_1$ bis zur Zeit $t_2$, sodass die gesamte zugeführte Wärme zum Schmelzen aller vorhandenen Eiskristalle verwendet wird und eines zweiten Temperaturintervalls, vom Temperaturübergangspunkt $T_2$ zu einem Endtemperaturpunkt $T_3$ zu den Zeitpunkten $t_2$ und $t_3$ umfassend einen verschliessbaren Raum, um eine spezielle Menge an Kristallsuspensionsmischung während des Betriebs aufzunehmen, zumindest ein Temperatursensor um die Temperatur der Kristallsuspensionsmischung zu messen, **dadurch gekennzeichnet, dass** Heizmittel zur Zufuhr von Wärme zu der Kristallsuspensionsmischung und Datenverarbeitungsmittel vorgesehen sind, um die zeitabhängige Erfassung der zugeführten Wärmemenge als auch die Temperaturänderungen der Kristallsuspensionsmischung zu erfassen, wobei die Datenverarbeitungsmittel weiters zur Bestimmung der Kristallfraktion der bestimmten Menge an Kristallsuspensionsmischung basierend auf den Verfahrensschritten gemäss Anspruch 1 ausgebildet sind.

**6.** Ein Messsystem nach Anspruch 5, **dadurch gekennzeichnet, dass** der Raum die Form eines Behälters hat.

**7.** Ein Messsystem nach Anspruch 5, **dadurch gekennzeichnet, dass** der Raum in Form einer Bypassleitung ausgebildet ist.

**8.** Ein Messsystem nach einem oder mehreren der vorhergehenden Ansprüche 5 - 7, **dadurch gekennzeichnet, dass** der Raum über zumindest eine Zwischenleitung mit dem Kristallwachstumsbehälter verbunden ist.

**9.** Ein Messsystem nach einem oder mehreren der vorhergehenden Ansprüche 5 - 8, **dadurch gekennzeichnet, dass** Mischmittel in dem Raum angeordnet sind.

**10.** Ein Messsystem nach Anspruch 9, **dadurch gekennzeichnet, dass** die Mischmittel in Form einer Pumpe ausgebildet sind, um die Menge an Kristallsuspensionsmischung, welche vom Kristallwachstumsbehälter abgezogen ist, zu zirkulieren.

**11.** Ein Messsystem nach einem oder mehreren der vorhergehenden Ansprüche 5 - 8, **dadurch gekennzeichnet, dass** das System Mittel umfasst, um die Expansion der Kristallsuspensionsmischung, welche während des Betriebs erfolgt, in dem Raum zu kompensieren.

**12.** Ein Messsystem nach Anspruch 11, **dadurch gekennzeichnet, dass** Kompensationsmittel in der Form eines flexiblen Wandteils des Raums sind, beispielsweise eine Membran.

**13.** Ein Messsystem nach Anspruch 12, **dadurch gekennzeichnet, dass** eine Gasmenge auf der Seite des flexiblen Wandteils vorhanden ist, der von der Kristallsuspensionsmischung entfernt ist.

**14.** Ein Messsystem nach Anspruch 12, **dadurch gekennzeichnet, dass** die Kompensationsmittel die Form eines Überflussrohrs haben.

**15.** Ein Messsystem nach einem oder mehreren der vorhergehenden Ansprüche 5 - 14, **dadurch gekennzeichnet, dass** das System weiters ein Anzeigemittel umfasst, um die während der Messung erfassten Messdaten und die erhaltenen Ergebnisse anzuzeigen.

**Revendications**

**1.** Procédé pour déterminer la fraction cristalline dans un mélange d'une suspension de cristaux dans une cuve de croissance de cristaux faisant partie d'un appareil de cristallisation pour la concentration d'un mélange par cristallisation dans le but d'obtenir un produit concentré, **caractérisé par** les étapes de

A) prélever une quantité particulière du mélange de suspension de cristaux de la cuve de croissance de cristaux;
B) fournir de la chaleur audit mélange en relation avec le temps et enregistrer simultanément la température dans le mélange;
C) dériver du profil de température enregistré un premier intervalle de température d'un point de départ T1 à un point de transition de température T2 durant un intervalle de temps du temps t1 au temps t2, lorsque toute la chaleur fournie est utilisée pour faire fondre les cristaux de glace qui sont présents et
un deuxième intervalle de température dudit point de transition de température T2 à un point de température final T3 aux points de temps t2 et t3;
D) dériver la chaleur spécifique du mélange de suspension sur la base de la quantité de chaleur fournie et des changements de température durant le deuxième intervalle;
E) dériver la chaleur de fusion du mélange de suspension de cristaux sur la base de la quantité de chaleur fournie, des changements de température durant le premier intervalle et la chaleur spécifique dérivée à l'étape D;
F) déterminer la fraction cristalline sur la base de la chaleur de fusion dérivée à l'étape E et de la quantité du mélange de suspension de cristaux prélevée de la cuve de croissance de cristaux.

**2.** Procédé selon la revendication 1, **caractérisé en ce que** le mélange du mélange de suspension de cristaux a lieu à l'étape B.

**3.** Procédé selon la revendication 1 ou 2, **caractérisé en ce qu'**une correction est faite de l'amenée externe possible de chaleur et/ou de l'amenée de chaleur possible résultant du processus de mélange.

**4.** Procédé selon l'une quelconque ou plusieurs des revendications précédentes, **caractérisé en ce que** la quantité du mélange de suspension de cristaux prélevée de la cuve de croissance de cristaux est ramenée dans celle-ci après l'étape F.

**5.** Système de mesure pour déterminer la fraction cristalline dans un mélange de suspension de cristaux dans une cuve de croissance de cristaux faisant partie d'un appareil de cristallisation pour la concentration d'un mélange par cristallisation dans le but d'obtenir un produit concentré, comprenant

un espace pouvant être fermé pour la réception d'une quantité particulière du mélange de suspension de cristaux durant le fonctionnement;

au moins un capteur de température pour mesurer la température du mélange de suspension de cristaux; **caractérisé par**

un moyen de chauffage pour fournir de la chaleur à ladite quantité particulière du mélange de suspension de cristaux, et

un moyen de traitement de données agencé pour l'enregistrement lié au temps de la quantité de chaleur fournie à ladite quantité particulière du mélange de suspension de cristaux ainsi que des changements de température dans ladite quantité particulière du mélange de suspension de cristaux durant ledit intervalle de temps spécifique, où pour déterminer la fraction cristalline dans ladite quantité particulière du mélange de suspension de cristaux, basée sur les étapes du procédé selon la revendication 1.

**6.** Système de mesure selon la revendication 5, **caractérisé en ce que** ledit espace se présente sous la forme d'une cuve.

**7.** Système de mesure selon la revendication 5, **caractérisé en ce que** ledit espace se présente sous la forme d'un conduit de contournement.

**8.** Système de mesure selon l'une quelconque ou plusieurs des revendications précédentes 5 à 7, **caractérisé en ce que** l'espace est relié à la cuve de croissance de cristaux par au moins un conduit intermédiaire.

**9.** Système de mesure selon l'une quelconque ou plusieurs des revendications précédentes 5 à 8, **caractérisé en ce que** des moyens de mélange sont présents dans ledit espace.

**10.** Système de mesure selon la revendication 9, **caractérisé en ce que** lesdits moyens de mélange se présentent sous la forme d'une pompe pour faire circuler la quantité du mélange de suspension de cristaux prélevée de la cuve de croissance de cristaux.

**11.** Système de mesure selon l'une quelconque ou plusieurs des revendications précédentes 5 à 8, **caractérisé en ce que** le système comprend des moyens qui compensent l'expansion du mélange de suspension de cristaux dans l'espace qui se produit durant le fonctionnement.

**12.** Système de mesure selon la revendication 11, **caractérisé en ce que** les moyens de compensation se présentent sous la forme d'une portion de paroi flexible de l'espace, par exemple d'une membrane.

**13.** Système de mesure selon la revendication 12, **caractérisé en ce qu'**une quantité de gaz est présente sur le côté de la portion de paroi flexible éloignée du mélange de suspension de cristaux.

**14.** Système de mesure selon la revendication 12, **caractérisé en ce que** lesdits moyens de compensation se présentent sous la forme d'une vanne de trop-plein.

**15.** Système de mesure selon l'une quelconque ou plusieurs des revendications précédentes 5 à 14, **caractérisé en ce que** le système comprend en outre un moyen d'affichage pour afficher les données de mesure enregistrées durant la mesure ainsi que les résultats obtenus.

FIG.1

FIG. 2A

FIG. 2B

FIG. 2C

FIG. 3

**REFERENCES CITED IN THE DESCRIPTION**

**Patent documents cited in the description**

- DE 4209073

- EP 0051340 A